# EUROPEAN PATENT APPLICATION

(11) **EP 4 080 374 A1**
(43) Date of publication of application: **26.10.2022**
(21) Application number: 22157423.9
(22) Date of filing: 18.02.2022
(51) Int. Cl.: G06F 13/40, G06F 13/42

(54) **DEVICE CONTROL APPARATUS AND CONTROL METHOD**

(30) Priority: 22.04.2021 JP 2021072797
(71) Applicant: Toshiba TEC Kabushiki Kaisha, Tokyo 141-8562 (JP)
(72) Inventor: Wang, Xiaozhou, Shinagawa-ku, Tokyo 141-8562 (JP)
(74) Representative: Bandpay & Greuter

(57) **Abstract**

According to one embodiment, a device control apparatus includes a communication interface connectable to several client terminals via a network and a local device interface connectable to several peripheral devices. The device control apparatus functions as registration unit configured to receive an occupation request for a peripheral device from a client terminal and then register the peripheral device for which the occupation request has been received as occupied by the client terminal if the peripheral device is not registered as occupied by another client terminal. A setting unit sets a release time for releasing the occupation of the registered peripheral device, and an update unit updates the release time whenever communication occurs between the registered peripheral device and the client terminal. A release unit releases the registered occupation of the peripheral device once the release time elapses.

## Description

### FIELD

Embodiments described herein relate generally to a device control apparatus for computer peripheral devices and a control method for a device control apparatus for computer peripheral devices.

### BACKGROUND

In recent years, a device control system has been developed in which computer peripheral devices, such as printers, displays, and scanners, are locally connected to a device control apparatus that is connected to a network to which a plurality of client terminals are connected to permit sharing of the peripheral devices connected to the device control apparatus via the network. Since the required number of peripheral devices may be reduced in comparison to a system in which each client terminal is individually provided with its own peripheral devices, such a device control system has an advantage that overall system costs might be reduced.

When a device control apparatus of this type receives a device use request (or reservation request) from a client terminal, use (or reservation) is generally permitted if the peripheral device is not already in use (or reserved) by another client terminal. Subsequently, the device control apparatus releases the in-use/reserved status (collectively referred to in this context as "occupied status") of the peripheral device only after an open or release request is sent from the client terminal. Thus, the client terminal can use the device exclusively until release.

However, since a peripheral device occupied by a client terminal is not released from its occupied status until the peripheral device is specifically released by the client terminal, there may be system trouble such as when the occupying client terminal is turned off before a release request has been output by the occupying client terminal. In such a case, other client terminals might not be able to use the peripheral device for some time.

### BRIEF DESCRIPTION OF THE DRAWINGS

FIG. 1 is a schematic configuration of a device control system.
FIG. 2 is a block diagram of a device server.
FIG. 3 depicts a data structure of a device management table.
FIG. 4 depicts a data structure of a session record.
FIG. 5 depicts a data structure of a validity period record according to a first embodiment.
FIG. 6 depicts a data structure of a request record.
FIG. 7 is a flowchart of aspects of an information processing procedure executed by a processor of a device server according to a control program.
FIG. 8 is a flowchart of aspects of an information processing procedure executed by a processor of a device server according to a control program.
FIG. 9 is a flowchart of aspects of an information processing procedure executed by a processor of a device server according to a control program.
FIG. 10 is a flowchart of aspects of an information processing procedure executed by a processor of a device server according to a control program.
FIG. 11 depicts a data structure of a validity period record according to a second embodiment.
FIG. 12 is a flowchart of aspects of an information processing procedure executed by a processor of a device server according to a control program.
FIG. 13 depicts a device server according to a third embodiment.
FIG. 14 depicts a data structure of a device management table.
FIG. 15 is a flowchart of aspects of an information processing procedure executed by a processor of a device server according to a control program in a third embodiment.

### DETAILED DESCRIPTION

The invention is set out in the appended set of claims.

A device control apparatus and a control method thereof that can prevent a peripheral device from being continuously occupied is provided in certain embodiments.

In general, according to one embodiment, a device control apparatus has a communication interface connectable to a plurality of client terminals via a network and a local device interface connectable to a plurality of peripheral devices. A registration unit is configured to receive an occupation request for a peripheral device from a client terminal and then register the peripheral device for which the occupation request has been received as occupied by the client terminal if the peripheral device is not already registered as occupied by another client terminal. A setting unit is configured to set a release time for releasing the occupation of the registered peripheral device. An update unit is configured to update the release time if communication occurs between the registered peripheral device and the client terminal occurs. A release unit is configured to release the registered occupation of the peripheral device when the release time elapses.

Hereinafter, embodiments of a device control apparatus and a control method thereof will be described with reference to the drawings.

### (First Embodiment)

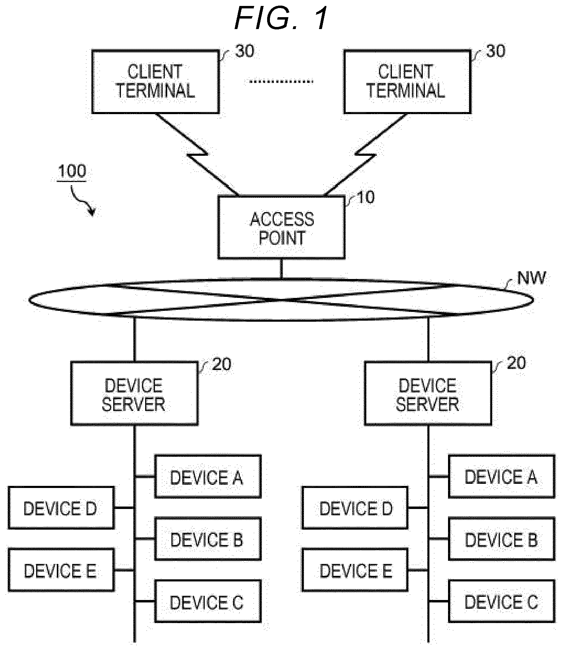

The first embodiment will be described with reference to FIGS. 1 to 10.

### Explanation of a device control system

FIG. 1 depicts a device control system 100 according to the first embodiment. The device control system 100 includes an access point 10 and a device server 20 connected to a network NW The network NW can be the Internet, a wide area network (WAN), or a local area network (LAN). The network NW may be a wired line network or may be a wireless network. The network NW may be a mixture of wired and wireless connections.

The access point 10 in this example is a communication facility installed at a key point as a relay base for data communication via a wireless LAN between at least one device server 20 connected to the network NW and multiple client terminals 30. The wireless LAN conforms to, for example, a Wi-Fi^{®} standard. It is noted that, although FIG. 1 illustrates only one access point 10, the number of access points 10 is not limited to one. Two or more access points 10 may be connected to the network NW in consideration of the scale, layout, and the like of the facility.

The device server 20 is a computer device that locally connects to and controls computer peripheral devices. The device server 20 is one example of a device control apparatus. The device control system 100 is configured by connecting one or more device servers 20 to the network NW. In the first embodiment, two device servers 20 are connected to the network NW, but, in general, any number of device servers 20 may be connected.

Each device server 20 locally connects to and controls at least one peripheral device. The particular types and numbers of each peripheral device connected to and controlled by each device server 20 is not limited. For example, each device server 20 may be locally connected two or more types of peripheral devices. Each device server 20 can be connected to different peripheral device types or the same types. FIG. 1 illustrates device servers 20 which are each connected to a device A, a device B, a device C, a device D, and a device E.

A client terminal 30 is a computer terminal capable of requesting the device server 20 to perform processing and then receiving services from the device server 20 via the network NW Each client terminal 30 includes an input device and a display device. For example, a client terminal 30 includes a built-in wireless communication circuit. For example, a tablet terminal, a smartphone, a notebook computer, or the like can be a client terminal 30. In addition, a stationary computer terminal may be a client terminal 30.

The device control system 100 can be located in (or otherwise provided for) a retail store where, for example, a store clerk performs customer service work, and inspection work, or the like by using a client terminal 30 in which a point-of-sale (POS) application is installed. That is, the client terminal 30 in this example functions as a point-of-sale (POS) terminal. In this type of the retail store, during the customer service work or the inspection work, the clerk reads a barcode attached to merchandise with a scanner. If the merchandise is attached to an RF tag, the clerk reads the RF tag with an RFID reader. If the clerk instructs issuance of a receipt, a purchase receipt or an inspection receipt is issued from a printer. In addition, if a customer desires to make a non-cash transaction with a credit card, electronic money, or the like, the clerk performs transaction settlement by using a credit terminal or an electronic money terminal. If the client terminal 30 itself does not incorporate a scanner (e.g., a barcode scanner), a RFID reader, a printer, a credit terminal, an electronic money terminal, a coin change machine, or the like, there can be a need to use an external device for performing the customer service work or the inspection work. The device control system 100 is provided for this reason to connect the required peripheral devices to the client terminal 30. The peripheral devices, such as a scanner, an RFID reader, a printer, a credit terminal, an electronic money terminal, or the coin change machine are provided in this present example as the device A, the device B, the device C, the device D, or the device E connected to a device server 20. The device server 20 enables each client terminal 30 to reserve and use a desired peripheral device via the device server 20. As described above, in the first embodiment, a plurality of client terminals 30 can share the various peripheral devices connected to each device server 20.

### Explanation of Device Server

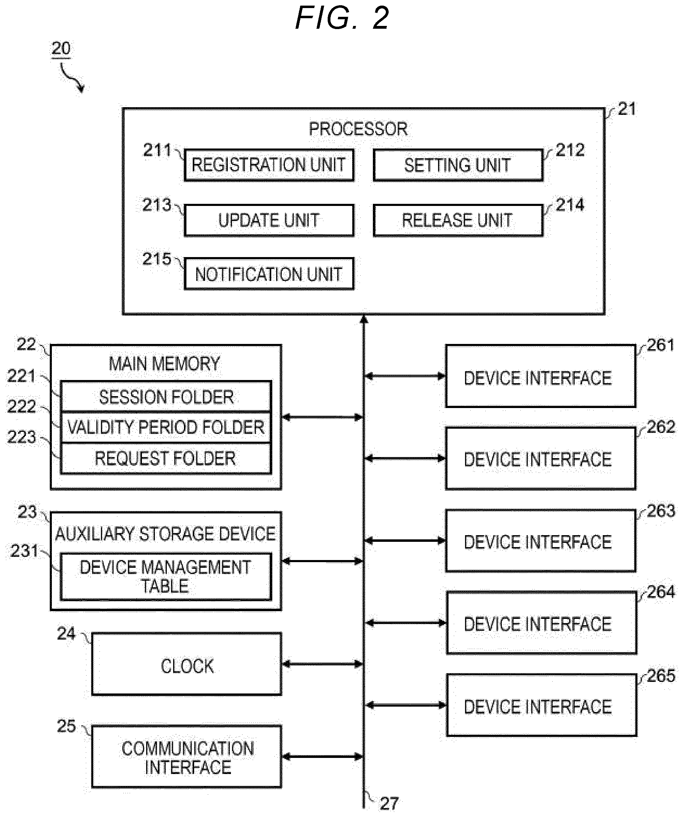

FIG. 2 is a block diagram of the device server 20. The device server 20 includes a processor 21, a main memory 22, an auxiliary storage device 23, a clock 24, a communication interface 25, a plurality of device interfaces (device interfaces 261, 262, 263, 264, and 265), and a system bus 27. The system bus 27 comprises an address bus, a data bus, and the like. The device server 20 connects the processor 21, the main memory 22, the auxiliary storage device 23, the clock 24, the communication interface 25, and the respective device interfaces 261, 262, 263, 264, and 265 to the system bus 27 directly or via a signal input and output circuit. While individual device interfaces 261, 262, 263, 264, and 265 are depicted as distinct aspects, in some examples, such individual device interfaces may be integrated into a single or unitary component or the like. And furthermore, the individual device interfaces 261, 262, 263, 264, and 265 may be referenced collectively and/or individually as a device interface, a local device interface, or the like.

The processor 21 controls each component to realize various functions of the device server 20 according to an operating system, an application program, or the like. The processor 21 is, for example, a central processing unit (CPU).

The main memory 22 includes a non-volatile memory area and a volatile memory area. The main memory 22 stores programs such as an operating system and an application program in the non-volatile memory area. In some cases, the main memory 22 may store data necessary for the processor 21 to execute the processing for controlling each component in a non-volatile or volatile memory area. The main memory 22 uses a volatile memory area as a work area where data can be appropriately rewritten by the processor 21. The non-volatile memory area is, for example, a read only memory (ROM). The volatile memory area is, for example, a random access memory (RAM).

For example, an electric erasable programmable read-only memory (EEPROM), a hard disc drive (HDD), a solid state drive (SSD), or the like is used as the auxiliary storage device 23. The auxiliary storage device 23 stores the data used by the processor 21 for performing various processing or the data generated by the processing of the processor 21. In some cases, the auxiliary storage device 23 may store the above-mentioned application program.

The clock 24 functions as a time information source of the device server 20. The processor 21 acquires the current date and time based on the time information tracked by the clock 24.

The communication interface 25 is connected to the network NW The communication interface 25 performs data communication with the other device connected to the network NW according to a predetermined communication protocol. The communication protocol is, for example, an HTTP protocol. Other devices are typically a client terminal 30 connected via the access point 10 and the other device server 20. Other devices may include devices other than the client terminal 30 or the other device server 20.

The plurality of device interfaces 261, 262, 263, 264, and 265 connect different types of devices. For example, the device interface 261 is connected to a device A by a communication cable, the device interface 262 is connected to a device B by a communication cable, the device interface 263 is connected to a device C by a communication cable, the device interface 264 is connected to a device D by a communication cable, and the device interface 265 is connected to a device E by a communication cable. Each of the device interfaces 261, 262, 263, 264, and 265 performs communication with a device connected by a communication cable according to a predetermined communication protocol. The communication protocol is, for example, a MQTT protocol used in publish-subscribe communication.

The device server 20 having such a configuration installs a control program so that the processor 21 has functions as a registration unit 211, a setting unit 212, an update unit 213, a release unit 214, and a notification unit 215.

The control program is installed in, for example, the auxiliary storage device 23. The control program may be installed in, for example, the main memory 22. A method of installing the control program in the main memory 22 or the auxiliary storage device 23 is not particularly limited. The control program can be recorded on a removable recording medium, or the control program can be distributed by communication via a network, and can be installed in the main memory 22 or the auxiliary storage device 23. The recording medium may be in any form as long as the recording medium can store a program such as a CD-ROM or a memory card and the device can read the program.

The registration unit 211 has a function for registering the device for which the occupation request has been performed if the device for which the occupation request has been performed from one of the client terminals 30 is not occupied by the other client terminal 30. If the occupation request for a plurality of the devices has been performed from the client terminal 30, the registration unit 211 collectively registers the plurality of devices for which the occupation request has been performed, under the condition that each device is not occupied by other client terminal 30. The registration destination of the device is a session folder 221 described later. The registration unit 211 can be rephrased as registration means.

The setting unit 212 has a function for setting the time for releasing the occupation of the registered device. The time setting destination is a validity period folder 222 described later. The setting unit 212 can be rephrased as setting means.

The update unit 213 has a function of updating the time for releasing the occupation of the device in the extension direction if the communication with the registered device occurs or the communication with the client terminal 30 that occupies the device occurs. If a plurality of the devices are collectively registered in the registration unit 211, the update unit 213 updates the time for releasing the occupation of the plurality of devices including the device in the extension direction if communication with at least one of the plurality of devices occurs. The update unit 213 can be rephrased as update means.

The release unit 214 has a function of releasing the registration of the device if the time for releasing the occupation of the device has elapsed without the occurrence of the communication with the registered device and the client terminal 30 that occupies the device. The time for releasing the occupation of the device is the time set by the setting unit 212 and updated by the update unit 213. The release unit 214 can be rephrased as release means.

The notification unit 215 has a function of notifying the client terminal 30 that has occupied the device of which registration was released by the release unit 214 that the occupation of the device has been released. The notification is performed via the network NW The notification unit 215 can be rephrased as notification means.

In order to realize each of the above-mentioned functions, the device server 20 uses a portion of the auxiliary storage device 23 for a device management table 231. In addition, the device server 20 uses a portion of the main memory 22 as storage areas for the session folder 221, the validity period folder 222, and a request folder 223.

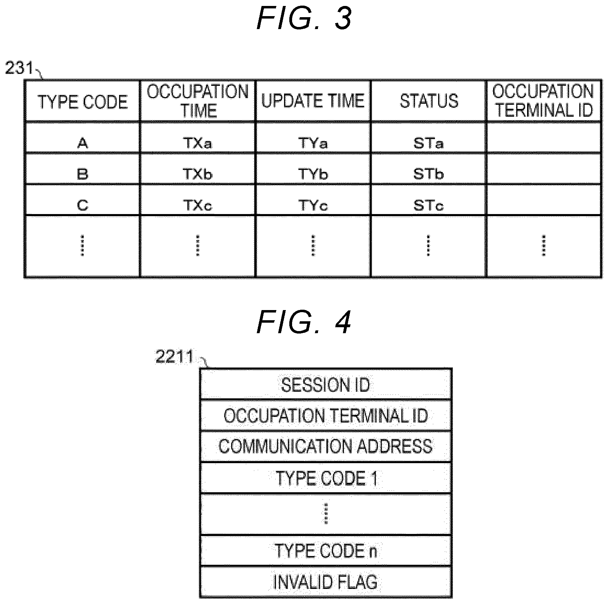

The device management table 231 is for storing the data necessary for managing each device connected via the device interfaces 261 to 265. FIG. 3 is a schematic diagram illustrating the data structure of the device management table 231. The device management table 231 includes a type code column, an occupation time TX column, an update time TY column, a status ST column, and an occupation terminal ID column.

The type code is a code for identifying the various types of each peripheral device that can be connected to the device server 20. For example, the type code "A" is the type code of the device A in FIG. 1. The same applies to the type codes "B", "C", and the like.

The occupation time TX is the time when the client terminal 30 began to occupy the peripheral device (or alternatively a cumulative continuous occupation period). In FIG. 3, the occupation time TX of the device A having the type code "A" is represented by "TXa", the occupation time TX of the device B having the type code "B" is represented by "TXb", the occupation time TX of the device C having the type code "C" is represented by "TXc".

The update time TY is a time for extending the present occupation time when communication between the particular device occupied by the client terminal 30 and the client terminal 30 occurs. In FIG. 3, the update time TY of the device A is represented by "TYa", the update time TY of the device B is represented by "TYb", and the update time TY of the device C is represented by "TYc".

The status ST is information that indicates whether the device is in the open status or the occupied status. In FIG. 3, the status ST of the device A is represented by "STa", the status ST of the device B is represented by "STb", and the status ST of the device C is represented by "STc".

The occupation terminal ID is identification information for the client terminal 30 that occupies the respective device(s). A unique terminal ID is set for each client terminal 30.

The occupation time TX and the update time TY are set according to the use and the like. The update time TY may be a time equal to the occupation time TX. In that case, the column of the update time TY may be deleted from the device management table 231, and the occupation time TX and the update time TY may be a unified time.

The session folder 221 is for storing a session record 2211 (refer to FIG. 4). The session record 2211 is information associating the client terminal 30 with a peripheral device respectively occupied by the client terminal 30.

FIG. 4 is a schematic diagram illustrating a data structure of the session record 2211. The session record 2211 includes a session ID, an occupation terminal ID, a communication address, a type code, and an invalid flag.

The session ID is the identification information generated each time a device is occupied by a client terminal 30. In this context, a session starts when communication with the client terminal 30 begins and then ends at the end of the communication. The occupation terminal ID is identification information of the client terminal 30 that occupies the device. The communication address is a communication address on the network NW set for the client terminal 30. The type code is identification information of the device occupied by the client terminal 30. If one client terminal 30 occupies a plurality of the peripheral devices, the type code of each device can be described in the session record 2211. The invalid flag is a 1-bit data for identifying whether the session record 2211 is valid or invalid. In the present embodiment, the invalid flag is set to "0" if the data of the session record 2211 is valid, and the invalid flag is set to "1" if the data is invalid.

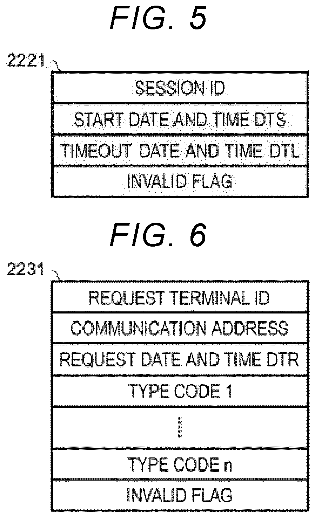

The validity period folder 222 is for storing a validity period record 2221 (refer to FIG. 5). The validity period record 2221 is information indicating the time the client terminal 30 is permitted to occupy the device.

FIG. 5 is a schematic diagram illustrating a data structure of the validity period record 2221. The validity period record 2221 includes a session ID, a start date and time DTS, a timeout date and time DTL, and an invalid flag.

The session ID is as described above. The start date and time DTS is the date and time when the client terminal 30 began occupation of the device, that is, the start date and time of the session. The timeout date and time DTL is the end date and time of the session. The invalid flag is a 1-bit data for identifying whether the validity period record 2221 is still valid or is now invalid. In the present embodiment, the invalid flag is set to "0" if the data is valid, and the invalid flag is set to "1" if the data is invalid.

The request folder 223 is for storing a request record 2231 (refer to FIG. 6). The request record 2231 is information regarding an occupation request from a client terminal 30 that is rejected because another client terminal 30 occupies the device.

FIG. 6 is a schematic diagram illustrating a data structure of the request record 2231. The request record 2231 includes a request terminal ID, a communication address, a request date and time DTR, a type code, and an invalid flag.

The request terminal ID is the identification information of the client terminal 30 which has sent the occupation request. The communication address is a communication address on the network NW set for the client terminal 30. The request date and time DTR is the date and time when the occupation request was received from the client terminal 30. The type code is identification information of the peripheral device in the occupation request. If the occupation request for a plurality of the devices has been performed from one client terminal 30, the type code of each device can be described in the request record 2231. The invalid flag is a 1-bit data for identifying whether the request record 2231 is valid or invalid. In the present embodiment, the invalid flag is set to "0" if the data is valid, and the invalid flag is set to "1" if the data is invalid.

### Explanation of operation of device server

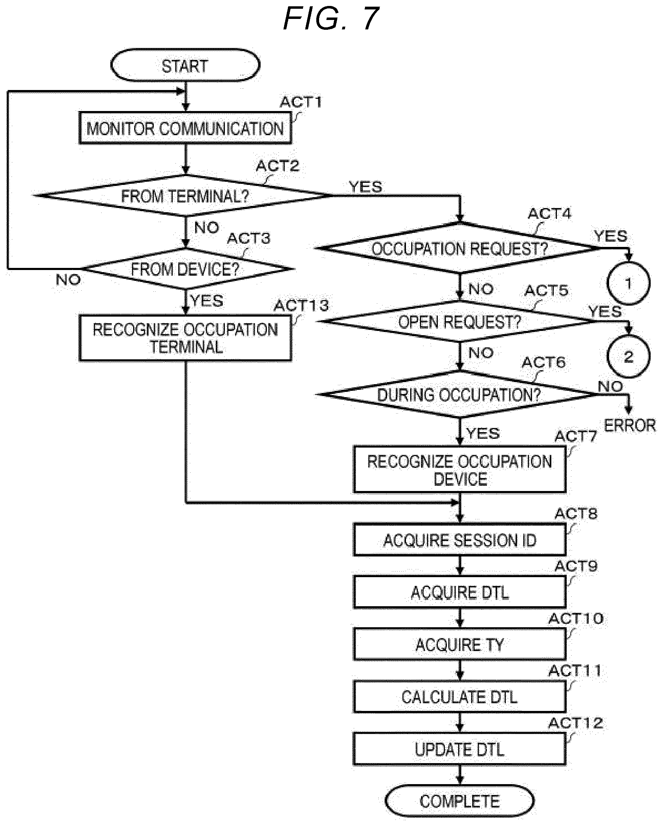

FIGS. 7 to 10 are flowcharts illustrating information processing procedures executed by the processor 21 of the device server 20 according to a control program. The information processing procedure illustrated by the flowcharts are examples for purposes of overall description. The specifics of the information processing procedures can be changed or varied as appropriate to provide substantially similar functions as those described.

In ACT1 of FIG. 7, the processor 21 monitors communications received via the communication interface 25 and each device interface 261 to 265. Then, the processor 21 confirms whether or not there is communication from a client terminal 30 via the communication interface 25 as ACT2. If there is no communication with the client terminal 30, the processor 21 determines NO in ACT2 and proceeds to ACT3.

The processor 21 next confirms whether or not there is communication with a peripheral device via any one of the device interfaces 261 to 265 as ACT3. If there is no communication with any one of the peripheral devices, the processor 21 determines NO in ACT3 and returns to ACT1. That is, the processor 21 continues communication monitoring in ACT1 to ACT3.

In this communication monitoring, if it is confirmed that there is communication with a client terminal 30 via the communication interface 25 or there is otherwise communication by, for example, the HTTP protocol, the processor 21 determines YES in ACT2 and proceeds to ACT4. The processor 21 confirms whether or not the communication with the client terminal 30 is an occupation request for a device as ACT4. Presumably, the occupation request will be output from a client terminal 30 that does not already occupy the requested device, but some occupation requests may be submitted multiple times by the same client terminal. In some cases, client terminal 30 that already occupies another peripheral device may request occupation of a different peripheral device.

If the communication with the client terminal 30 is not an occupation request, the processor 21 determines NO in ACT4 and proceeds to ACT5. The processor 21 confirms whether or not the communication with the client terminal 30 is an open request for a device as ACT5. The open request is output from the client terminal 30 that occupies the device. The open request is not output from the client terminal 30 that does not already occupy the device.

If the communication with the client terminal 30 is not an open request for the device, the processor 21 determines NO in ACT5 and proceeds to ACT6. The processor 21 confirms whether or not there is the communication with the client terminal 30 that occupies the device as ACT6. The terminal ID of the client terminal 30 that occupies the device is described in the column of the occupation terminal ID in the device management table 231. If the terminal ID of the client terminal 30 included in the communication is in the column of the occupation terminal ID, the processor 21 determines that the communication is communication with the client terminal 30 that occupies device.

If the communication is communication with the client terminal 30 that does not occupy the device, the processor 21 determines NO in ACT6 and sets the communication with the client terminal 30 as an error. It is noted that in some examples or instances the processor 21 may execute processing according to the communication content from the non-occupying client terminal 30 without signaling a communication error.

In the case of communication from the client terminal 30 occupying the device, the processor 21 determines YES in ACT6 and proceeds to ACT7. Then, the processor 21 executes the processing of ACT7 to ACT12. The processing of ACT7 to ACT12 will be described later. Before that, the processing procedure if the communication with the client terminal 30 is the occupation request for the device will be described.

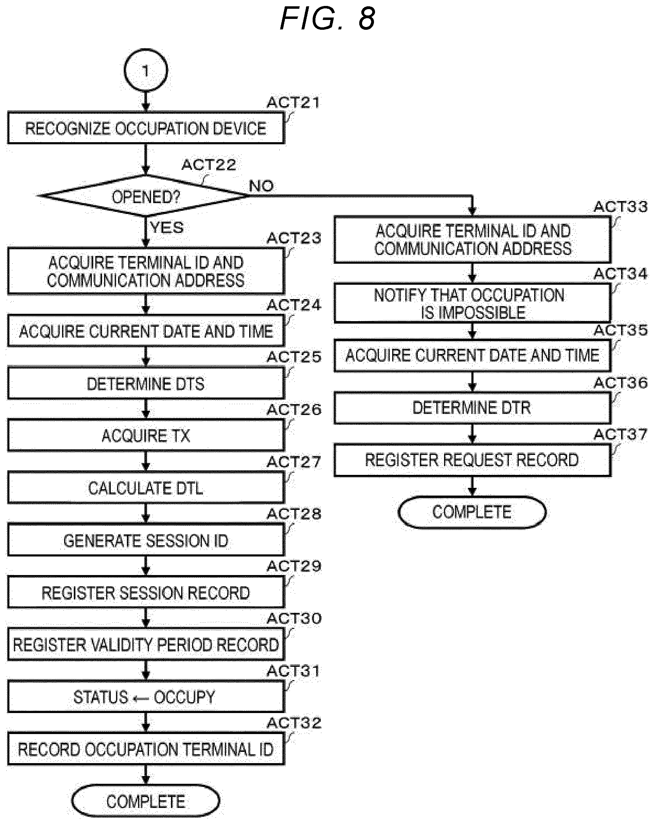

If the communication with the client terminal 30 is an occupation request for a device, the processor 21 determines YES in ACT4 and proceeds to ACT21 in FIG. 8. The processor 21 recognizes (identifies) the type code of the device for which the occupation request has been made from the client terminal 30 as ACT21. The occupation request from the client terminal 30 includes information indicating the type of device desired to be occupied. For example, if the client terminal 30 performs a merchandise registration process for reading a barcode or RF tag, the client terminal 30 transmits the occupation request for a barcode scanner or an RFID scanner to the device server 20. That is, the occupation request includes information indicating the barcode scanner or the RFID scanner is requested. Once the client terminal 30 completes the merchandise registration process and begins to execute the settlement process for settling the price of the merchandise being purchased, the client terminal 30 transmits the occupation request to the device server 20 for the credit terminal, the electronic money terminal, the coin change machine, and/or the receipt printer as required for the settlement process. That is, the information indicating the credit terminal, the electronic money terminal, the coin change machine, and/or the receipt printer is included in the occupation request. It is noted that the device to be occupied may be determined according to the settlement method desired by the customer. In addition, whether to include the receipt printing process for printing the receipt in the settlement process may be set by each store and/or customer preference. If the settlement process does not automatically include a receipt print process, the client terminal 30 may be instructed to request or omit the receipt print process. When the customer desires a printed receipt for the transaction, the client terminal 30 transmits an occupation request for occupying the printer to the device server 20 in addition to the occupation request for occupying the credit terminal, the electronic money terminal, and/or the coin change machine. The processor 21 recognizes the type code of the device for which the occupation request has been performed from the information. It is noted that the information may be the type code itself or may be information other than the type code. In the case of being other than the type code, the processor 21 acquires the type code of the device specified by the information.

If the processor 21 recognizes the type code of the device for which the occupation request has been performed from the client terminal 30, the processor 21 confirms whether or not the device specified by the type code is in the open status as ACT22. That is, the processor 21 investigates the status corresponding to the type code by referring to the device management table 231. At this time, when the occupation request for a plurality of the devices has been performed from the client terminal 30, the processor 21 investigates the status of each device. As a result, if all the statuses indicate the open status, the processor 21 determines YES in ACT22 and proceeds to ACT23.

The processor 21 acquires the terminal ID and communication address of the client terminal 30 (the transmission source of the occupation request) as ACT23. In addition, the processor 21 acquires the current date and time as tracked by the clock 24 as ACT24. Then, the processor sets the current date and time as the occupation start date and time DTS as ACT25.

The processor 21 acquires the occupation time TX (permissible occupation time for a peripheral device) corresponding to the type code of the requested device by referring to the device management table 231 as ACT26. If an occupation request for a plurality of peripheral devices has been made at the same time, the processor 21 acquires the occupation time TX corresponding to the type code of each device and may select the longest occupation time TX from the occupation times TX for the requested devices.

The processor 21 calculates the timeout date and time DTL as ACT27. Specifically, the processor 21 calculates the date and time when the occupation time TX will have elapsed from the start date and time DTS as the timeout date and time DTL. For example, if it is assumed that the requested device of the client terminal 30 is a printer and the occupation time TX of the printer is set to be 5 minutes, the processor 21 sets the date and time 5 minutes after the start date and time DTS as the timeout date and time DTL. If the requested devices are a scanner and an RFID reader and the occupation time TX of the scanner is 2 minutes but the occupation time of the RFID reader is 3 minutes, the processor 21 selects the occupation time of 3 minutes of the RFID reader as the occupation time TX. Then, the processor 21 sets the date and time after 3 minutes from the start date and time DTS as the timeout date and time DTL (for both the scanner and the RFID reader).

The processor 21 generates a session ID as ACT28. For example, the processor 21 generates a new session ID by combining the start date and time DTS with consecutive numbers that are incremented upwards every time a new session ID is generated.

The processor 21 registers the session record 2211 as ACT29 in the session folder 221. That is, the processor 21 registers the session record 2211 including the session ID that was generated in ACT28, the terminal ID and the communication address acquired in ACT23, the type code of the device identified in ACT21, and the invalid flag of "0" in the session folder 221.

The processor 21 registers the validity period record 2221 as ACT30 in the validity period folder 222. That is, the processor 21 registers the validity period record 2221 having the session ID generated in ACT28, the terminal ID of the client terminal 30 for which the occupation request has been perform, the start date and time DTS determined in ACT25, the timeout date and time DTL calculated in ACT27, and the invalid flag of "0" in the validity period folder 222.

The processor 21 changes the status corresponding to the type code of the device recognized in ACT21 from the open status to the occupied status in the device management table 231 as ACT31. In addition, the processor 21 records the terminal ID (acquired in ACT23) in the column of the occupation terminal ID corresponding to the type code of the device identified in ACT21 in the device management table 231 as ACT32.

With the above, the processor 21 ends the information processing if the device requested to be occupied by the client terminal 30 was in the open status. The processor 21 returns to the communication monitoring status of ACT1.

The device server 20 functions as a registration unit 211 by the processor 21 executing the processing of ACT21, ACT22, ACT23, ACT28, ACT29, and ACT31. The device server 20 functions as a setting unit 212 by the processor 21 to executing the processing of ACT24, ACT25, ACT26, ACT27, and ACT30.

If at least one of the devices requested to be occupied by the client terminal 30 is already in an occupied status, the processor 21 determines NO in ACT22 and proceeds to ACT33. The processor 21 acquires the terminal ID and communication address of the client terminal 30 transmitting the occupation request as ACT33. Then, the processor 21 controls the communication interface 25 (as ACT34) so as to notify the client terminal 30 specified by the communication address that the requested device cannot be occupied. By this control, the client terminal 30 is notified via the communication network NW that the requested device cannot be occupied. In the client terminal 30 that has received such a notification, a display screen or the like indicating that the device cannot be occupied can be displayed by the display unit. Therefore, the operator of the client terminal 30 can know that the requested device cannot be occupied.

The processor 21 that has completed the processing of ACT34 acquires the current date and time as tracked by the clock 24 as ACT35. Then, the processor sets the current date and time as the request date and time DTR as ACT36.

The processor 21 registers the request record 2231 as ACT37 in the request folder 223. That is, the processor 21 registers the request record 2231 including the terminal ID and communication address acquired in ACT33, the request date and time determined in ACT36, the type code of the device recognized in ACT21, and the invalid flag of "0" in the request folder 223.

With the above, the processor 21 ends the information processing when the device requested to be occupied by the client terminal 30 is in the occupied status. The processor 21 returns to the communication monitoring status of ACT1.

In this way, if the occupation request for a device that is not presently occupied by any other client terminal 30 has been performed, the processor 21 executes the processing of ACT23 to ACT32. As a result, the session record 2211 is registered in the session folder 221. In addition, the validity period record 2221 is registered in the validity period folder 222. In the device management table 231, the status of the requested device is changed from the open status to the occupied status. As the occupation terminal ID for the device, the terminal ID of the client terminal 30 submitted the occupation request is set.

On the other hand, if the client terminal 30 requests to occupy a device already occupied by other client terminals 30, the processor 21 executes the processing of ACT33 to ACT37. As a result, the request record 2231 is registered in the request folder 223. The client terminal 30 submitted the occupation request is notified through the network NW that the occupation is not possible.

Next, the processing procedure of the processor 21 when communication from the client terminal 30 that occupies a device is received will be described.

If there is a communication other than an occupation request or an open request from the client terminal 30 already occupying the device, the processor 21 determines YES in ACT6 of FIG. 7 and proceeds to ACT7. The processor 21 recognizes the device occupied by the communication source client terminal 30 as ACT7. That is, the processor 21 recognizes the type code corresponding to the field in which the terminal ID of the client terminal 30 is set as the occupation terminal ID by referring to the device management table 231.

The processor 21 then selects the session record 2211 including the terminal ID of the client terminal 30 from the session folder 221 as ACT8 and acquires the session ID from the session record 2211. Then, the processor 21 acquires the timeout date and time DTL from the validity period record 2221 that includes the session ID as ACT9. In addition, the processor 21 acquires the update time TY corresponding to the type code recognized in ACT7 from the device management table 231 as ACT10. At this time, if the type codes of a plurality of devices are recognized, the processor 21 acquires the update time TY corresponding to each recognized type code and then selects the longest update time TY from the update times.

The processor 21 recalculates the timeout date and time DTL after extension by update time as ACT11. That is, the processor 21 uses the update time TY to adjust/update the timeout date and time DTL (previously acquired in ACT8) as a new timeout date and time DTL. The processor 21 then updates the timeout date and time DTL of the validity period record 2221 including the session ID acquired in ACT8 to the new timeout date and time DTL as ACT 12.

For example, if the update time TY is set to 1 minute for the scanner and a communication with the client terminal 30 that occupies only the scanner occurs, the timeout date and time DTL of the corresponding validity period record 2221 is extended by one minute. If, for example, the RFID reader and the scanner are both occupied by the client terminal 30 and the update time TY for the RFID reader is set to 2 minutes, the timeout date and time DTL of the corresponding validity period record 2221 is extended by 2 minutes (the longer of the two update times TY for the occupied devices).

With the above, the processor 21 ends the information processing. The processor 21 returns to the communication monitoring status of ACT1.

Next, the processing procedure of the processor 21 if the communication from a device occupied by a client terminal 30 occurs while in the communication monitoring status of ACT1 will be described.

If there is communication from a device occupied by a client terminal 30, the processor 21 determines YES in ACT3 of FIG. 7 and proceeds to ACT13. The processor 21 recognizes the client terminal 30 occupying the device as ACT13. That is, the processor 21 recognizes the occupation terminal ID corresponding to the type code of the device by referring to the device management table 231.

After that, the processor 21 executes the processing of ACT8 to ACT12. That is, the processor 21 selects the session record 2211 including the type code of the device making the communication from the session folder 221 as ACT8 and acquires the session ID from the session record 2211. Then, the processor 21 acquires the timeout date and time DTL from the validity period record 2221 including the session ID as ACT9. In addition, the processor 21 acquires the update time TY corresponding to the type code included in the session record 2211 from the device management table 231 as ACT10. If the type codes of a plurality of the devices are included in the session record 2211, the processor 21 acquires the update time TY corresponding to each type code, and then selects the longest update time TY from the update times.

The processor 21 re-calculates the timeout date and time DTL based on the update time TY as ACT11. That is, the processor 21 uses the update time TY to adjust/update the timeout date and time DTL acquired in ACT8 to a new timeout date and time DTL. The processor 21 changes the timeout date and time DTL of the validity period record 2221 including the session ID acquired in ACT8 to the new timeout date and time DTL as ACT12.

For example, if there is communication between a scanner (for which update time TY is set to 1 minute) and the client terminal 30 that just occupies the scanner, the timeout date and time DTL of the scanner is extended by 1 minute. On the other hand, if the client terminal 30 also occupies a RFID reader (having an update time of 2 minutes) along with the scanner, the timeout date and time DTL is extended by 2 minutes (RFID reader update time TY) even if there is only communication with the scanner and not the RFID reader.

The device server 20 functions as an update unit 213 by the processor 21 executing the processing of ACT7 to ACT13.

Next, the processing procedure of the processor 21 when there is an open request from the client terminal 30 occupying a device in the communication monitoring status of ACT1 will be described.

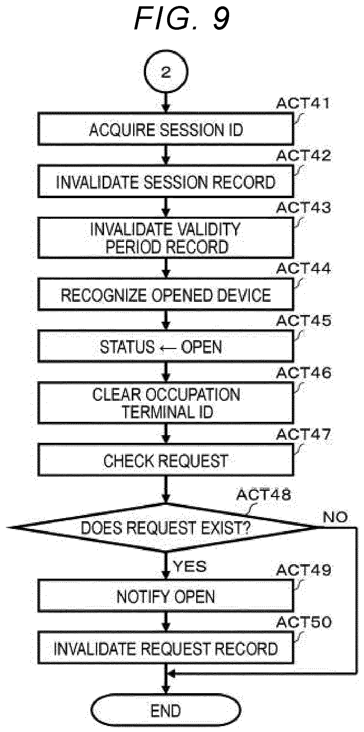

If there is an open request of the device from the client terminal 30, the processor 21 determines YES in ACT5 of FIG. 7 and proceeds to ACT41 of FIG. 9. The processor 21 selects the session ID as ACT41. Specifically, the processor 21 selects the terminal ID of the client terminal 30 of the open request transmission source and the session ID of the session record 2211 in which the type code of the device that is the open target is described. The open request includes the type code of the device which is the open target.

The processor 21 invalidates the session record 2211 as ACT42. That is, the processor 21 changes the invalid flag from "0" to "1" for the session record 2211 in which the session ID acquired in ACT41 is set. The processor 21 invalidates the corresponding validity period record 2221 as ACT43. That is, the processor 21 changes the invalid flag from "0" to "1" for the validity period record 2221 in which the session ID acquired in ACT41 is set.

The processor 21 identifies the type code of the device which is the open target as ACT44. Then, the processor 21 changes the status corresponding to the type code of the device recognized in ACT44 from the occupied status to the open status in the device management table 231 as ACT45. In addition, the processor 21 clears the occupation terminal ID recorded corresponding to the type code from the device management table 231 as ACT46.

The processor 21 checks the request folder 223 as ACT47. Then, the processor 21 checks for the presence or absence of the valid request record 2231 of which status corresponding to the type code is all in the open status as ACT48. The valid request record 2231 is a request record 2231 in which the invalid flag is set to "0". The request record 2231 can be also invalidated by changing the invalid flag from "0" to "1", for example, if a certain time has elapsed from the request date and time DTR.

If the corresponding request record 2231 does not exist, the processor 21 determines NO in ACT48 and skips the processing of ACT49 and ACT50.

If the corresponding request record 2231 exists, the processor 21 determines YES in ACT48 and proceeds to ACT49. The processor 21 controls the communication interface 25 to notify the client terminal 30 specified by the communication address included in the request record 2231 of the now open device as ACT49. By this control, the client terminal 30 specified by the communication address is notified of an open o device via the communication network NW In the client terminal 30 that has received this notification, for example, a display screen indicating that the device has been opened (released) is displayed on the display unit. Therefore, the operator of the client terminal 30 can know that the previously requested device has become available.

The processor 21 changes the invalid flag of the request record 2231 from "0" to "1" as ACT50. In this way, the request record 2231 is invalidated after the request record has been used for the open notification even before a certain time has elapsed from the request date and time DTR.

It is noted that, if there are a plurality of corresponding request records 2231, the processor 21 may selects the request record 2231 having the oldest request date and time DTR. Then, the processor 21 executes the processing of ACT49 and ACT50 based on the selected (e.g., oldest) request record 2231.

With the above, the processor 21 ends the information processing after an open request for a device. The processor 21 returns to a communication monitoring status of ACT1.

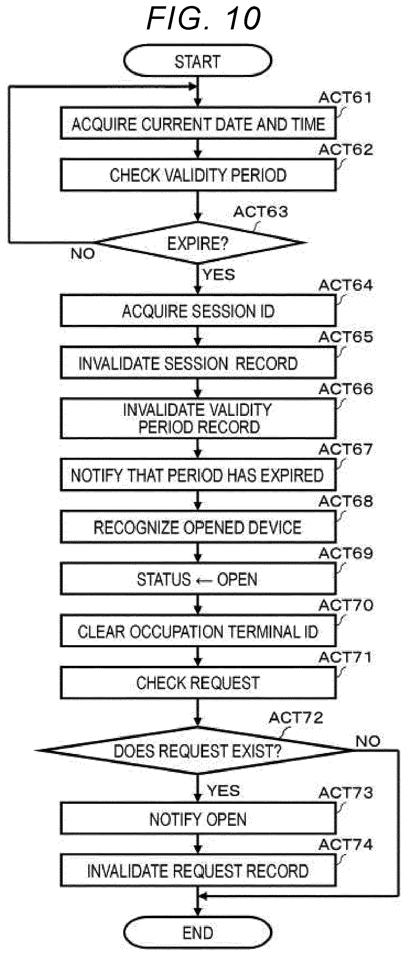

The processor 21 may execute the information processing of the procedure illustrated in the flowchart of FIG. 10 in parallel with the information processing illustrated in the flowcharts of FIGS. 7 to 9. That is, the processor 21 acquires the current date and time tracked by the clock 24 as ACT61. Then, the processor 21 checks the validity period folder 222 at the current date and time as ACT62. The processor 21 searches for the valid validity period record 2221 of which the timeout date and time DTL is earlier than the current date and time as ACT63. The valid validity period record 2221 is a validity period record 2221 in which the invalid flag is set to "0". If a valid validity period record 2221 for which the timeout date and time DTL is earlier than the current date and time is not detected, the processor 21 determines NO in ACT63 and returns to ACT61. The processor 21 executes the processing after ACT61 again.

If a valid validity period record 2221 for which the timeout date and time DTL is earlier than the current date and time is detected, the processor 21 determines YES in ACT63 and proceeds to ACT64. The processor 21 selects the session ID from the validity period record 2221 as ACT64.

The processor 21 changes the invalid flag from "0" to "1" in the session record 2211 including the session ID as ACT65. In addition, the processor 21 changes the invalid flag from "0" to "1" in the validity period record 2221 including the session ID as ACT66.

The processor 21 controls the communication interface 25 to notify the client terminal 30 specified by the communication address included in the session record 2211 invalidated due to the expiration of the occupation period of the device as ACT67. By this control, the corresponding client terminal 30 is notified of the expiration of the occupation period of a device via the communication network NW In the client terminal 30 that has received this notification, for example, a display screen indicating that the occupation period of the device has expired is displayed by the display unit. Therefore, the operator of the client terminal 30 can know that the occupation period of the device has expired.

The processor 21 recognizes the type code of the device included in the session record 2211 invalidated as ACT68. Then, the processor 21 changes the status corresponding to the type code of the device recognized in ACT68 from the occupied status to the open status in the device management table 231 as ACT69. In addition, the processor 21 clears the occupation terminal ID recorded corresponding to the type code from the device management table 231 as ACT70.

For example, if trouble or an erroneous operation such as turning off the power of a client terminal 30 that occupies a device occurs before an open request has been sent from the client terminal 30, the occupied device is eventually opened (made available again) when the timeout date and time DTL elapses. The client terminal 30 can be notified that the occupation period has expired.

The device server 20 functions as a release unit 214 by the processor 21 executing the processing of ACT61 to ACT66. In addition, the processor 21 functions as a notification unit 215 by the processor 21 executing the processing of ACT67.

Once the processing of ACT70 is completed, the processor 21 executes the same processing as the processing of ACT47 to ACT50 (of FIG. 9) as ACT71 to ACT74. Therefore, the operator of the client terminal 30 for which an occupation request for a device is rejected can know that the previously requested device has been made available (opened).

With the above, the processor 21 ends the processing illustrated in the flowchart of FIG. 10. After that, the processor 21 starts the same processing from ACT61 again.

As described above, the device server 20 has functions as a registration unit 211, a setting unit 212, an update unit 213, and a release unit 214. Therefore, in the client terminal 30 for which the session in which a device has been occupied is registered by the registration unit 211, thus even if trouble such as a power failure occurs before an open request for the device from the client terminal 30 is output, the device is opened by the release unit 214 when the timeout date and time DTL set for the session has elapsed. Therefore, it is possible to prevent devices from appearing occupied indefinitely and needlessly preventing other client terminals from using the devices.

In the described example, the timeout date and time DTL is when the occupation time TX set for the device that is an occupation target has elapsed from the start time of the session. If communication between the client terminal that is the target of the session and the device occurs, the timeout date and time DTL can be updated/extended with the update time TY set for the device after the communication occurs. Therefore, there can be no problem that, while the operator of the client terminal 30 is actively using a device, the device will be opened.

The device server 20 also has a function as the notification unit 215. Therefore, for example, the operator of the client terminal 30 occupying a device which is forcibly opened due to the power failure has an advantage that the operator can easily know that the device has been opened (released) after the power is restored.

### (Second embodiment)

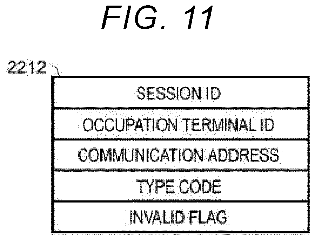

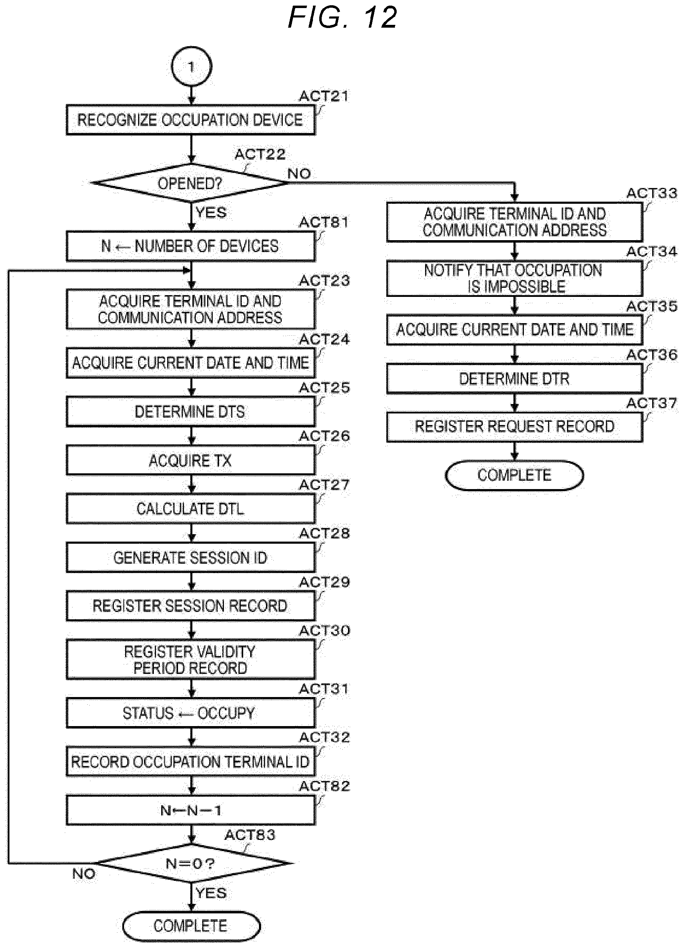

Next, the second embodiment will be described with reference to FIGS. 11 and 12.

FIG. 11 is a schematic diagram illustrating a data structure of a session record 2212 according to the second embodiment. The number of type codes included in the record is different from that of the session record 2211 according to the first embodiment. That is, in the first embodiment, if one client terminal 30 occupies a plurality of the devices, the type code of each device is described in the session record 2211. That is, all the devices occupied by one client terminal 30 are collectively managed as one group. In contrast, in the second embodiment, if one client terminal 30 occupies a plurality of the devices, separate session records 2212 for each of devices are generated. Then, the type code of the device to be occupied is set in each corresponding session record 2212.

In the second embodiment, if one client terminal 30 occupies a plurality of devices, the client terminal 30 session is managed separately for each device. Such management is enabled by changing the information processing procedure described with reference to FIG. 8 for the first embodiment to the procedure illustrated in FIG. 12.

FIG. 12 is a flowchart illustrating an information processing procedure of the processor 21 when communication with the client terminal 30 is based on a device occupation request. It is noted that the steps common with the description of FIG. 8 are designated by the same reference numerals.

In the first embodiment, if all the devices requested to be occupied by the client terminal 30 are in the open status, the processor 21 determines YES in ACT22 and proceeds to ACT23. In the second embodiment, the processor 21 determines YES in ACT22 and proceeds to ACT81. The processor 21 sets the total number of devices for which an occupation request has been submitted as the initial value of a device counter N as ACT81. After that, the processor 21 proceeds to ACT23 and executes the processing of ACT23 to ACT32 in the same manner as described above.

When there is an occupation request for a plurality of the devices, the processor 21 selects any one of the requested devices in ACT26 and acquires the occupation time TX of this device. In addition, the processor 21 registers the session record 2212 including only the type code of the selected device in the session folder 221 in ACT29. In ACT31, the processor 21 changes the status corresponding to the type code of the selected device from the open status to the occupied status. In ACT32, the processor 21 records the terminal ID of the client terminal 30 as the occupation terminal ID in correspondence with the type code of the selected device.

When the processing of ACT32 is completed, the processor 21 counts down (decrements) the device counter N by "1" as ACT82. Then, the processor 21 confirms whether or not the device counter N value has become "0" as ACT83. If the device counter N is still "1" or more, the processor 21 determines NO in ACT83 and returns to ACT23. The processor 21 selects a device other than the previously selected device and executes the processing of ACT23 to ACT32.

If the device counter N value is now "0", the processor 21 determines YES in ACT83 and ends the information processing in the procedure illustrated in FIG. 12.

In the second embodiment, for example, if the client terminal 30 requests to occupy the scanner and the RFID reader, a first session record 2212-1 in which the terminal ID of the client terminal 30 and the type code of the scanner are associated with each other and a second session record 2212-2 in which the terminal ID of the client terminal 30 and the type code of the RFID reader are associated with each other are registered in the session folder 221. In addition, a first validity period record 2221-1 including the session ID of the first session record 2212-1 and a second validity period record 2221-2 including the session ID of the second session record 2212-2 are registered in the validity period folder 222.

In this example, the timeout date and time DTL of the first validity period record 2221-1 is when the occupation time TX of the scanner has elapsed. The timeout date and time DTL of the second validity period record 2221-2 is when the occupation time TX of the RFID reader has elapsed.

However, if communication from the client terminal 30 occurs, the timeout date and time DTL of the first validity period record 2221-1 is updated with the update time TY of the scanner. The timeout date and time DTL of the second validity period record 2221-2 is updated with the update time TY of the RFID reader.

If communication from the scanner occurs, the timeout date and time DTL of the first validity period record 2221-1 is updated with the update time TY of the scanner. The timeout date and time DTL of the second validity period record 2221-2 is not updated.

If communication from the RFID reader occurs, the timeout date and time DTL of the second validity period record 2221-2 is updated with update time TY of the RFID reader. The timeout date and time DTL of the first validity period record 2221-1 is not updated.

When the timeout date and time DTL of the first validity period record 2221-1 has elapsed, the occupied status of the scanner is released. The occupied status of the RFID reader is not released until the timeout date and time DTL of the second validity period record 2221-2 has elapsed. The occupied status of the scanner is not necessarily released when the RFID reader is released and vice versa.

Therefore, for example, if the operator of the client terminal 30 that occupies both the scanner and the RFID reader executes the customer service work or the inspection work by using only the scanner, the RFID reader will be opened once the corresponding RFID reader timeout date and time DTL has elapsed. Therefore, the operator of other client terminals 30 who desires to execute the work using the RFID reader can more quickly occupy the opened RFID reader. Therefore, it is possible to improve the efficiency of the work using the available peripheral devices.

### (Third Embodiment)

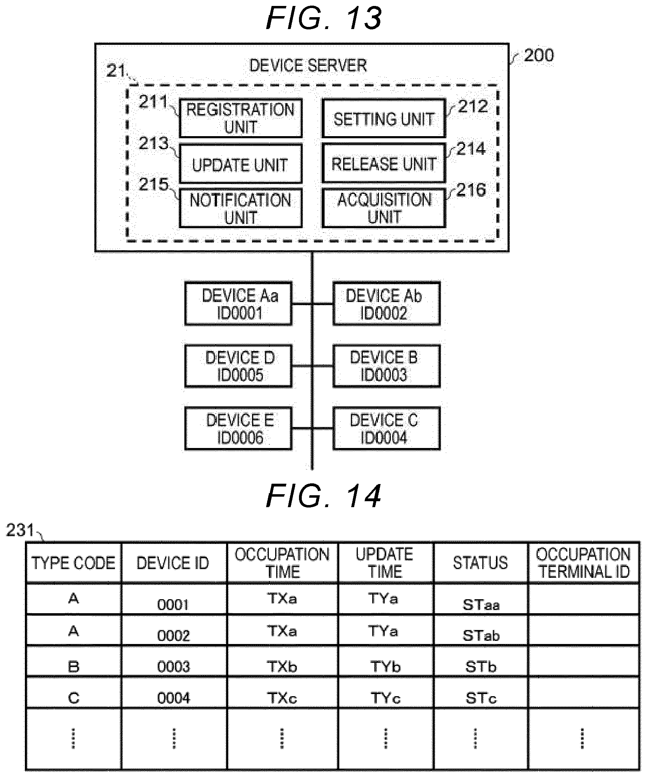

Next, a third embodiment will be described with reference to FIGS. 13 to 15.

FIG. 13 is a diagram illustrating a device server 200 according to the third embodiment. The device server 200 installs a control program so that the processor 21 has a function as an acquisition unit 216 in addition to the functions as the registration unit 211, the setting unit 212, the update unit 213, the release unit 214, and the notification unit 215 described above.

The acquisition unit 216 has a function of acquiring identification information from a device under the control of the device server 200. In the third embodiment, the identification information is a device ID set for each device. The device ID is unique information that differs even if two or more devices have the same type code.

FIG. 13 illustrates an example in which five types of devices of a device A, a device B, a device C, a device D, and a device E are under the control of the device server 200, and, with respect to the device A type, two devices (a device Aa having a device ID "0001" and a device Ab having a device ID "0002") are under control. Therefore, the device ID of the device B is "ID0003", the device ID of the device C is "0004", the device ID of the device D is "0005", and the device ID of the device E is "0006".

FIG. 14 is a schematic diagram illustrating a data structure of the device management table 231. The third embodiment is different from the first embodiment in that a device ID column is added to this device management table 231. Thus the occupation time TX, the update time TY, the status ST, and the occupation terminal ID can be recorded and tracked for each device ID even when two devices have the same type code.

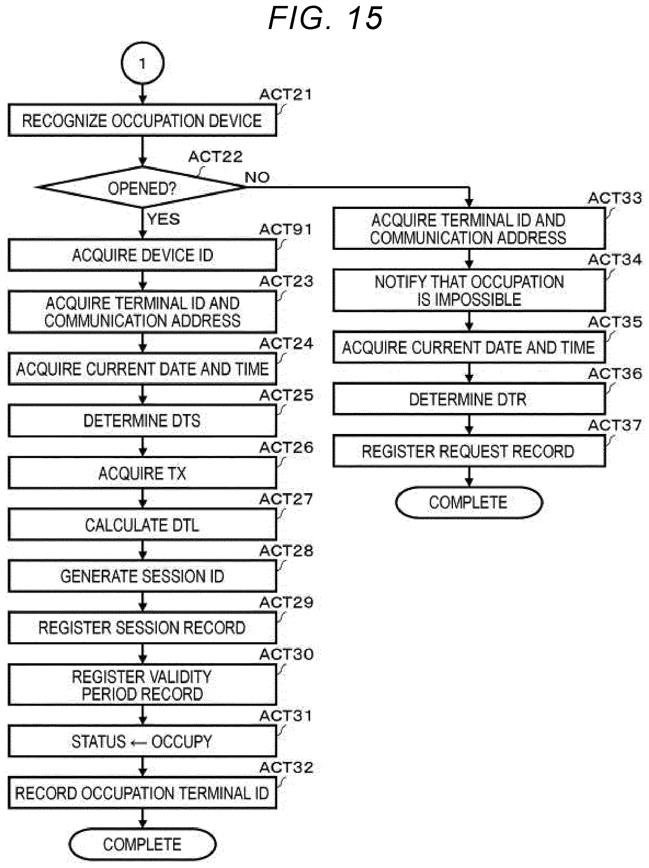

FIG. 15 is a flowchart illustrating an information processing procedure of the processor 21 when communication from the client terminal 30 is an occupation request for a device. It is noted that the steps common to FIG. 8 are designated by the same reference numerals in FIG. 15.

In the first embodiment, the processor 21 investigates the status corresponding to the type code of a device for which the occupation request has been sent from the client terminal 30 by referring to the device management table 231 in ACT22. Regarding this point, in the third embodiment, if a plurality of the devices for which an occupation request has been sent are connected to the device server 20, a plurality of statuses corresponding to the type codes of the devices are investigated. Then, if at least one status for a requested device is the open status, the processor 21 recognizes that the device is not in the occupied status.

Then, if the device for which the occupation request has been sent is in the open status, the processor 21 determines YES in ACT22 and proceeds to ACT91. The processor 21 acquires the device ID from the device which is in the open status as ACT91.

After that, the processor 21 proceeds to ACT23 and executes the processing of ACT23 to ACT32 in substantially the same manner as described above. In the present example, in ACT31, the status corresponding to the type code of a device and the device ID acquired from the device in ACT91 is changed from the open status to the occupied status. In addition, the terminal ID of the client terminal 30 is set in the column of the occupation terminal ID corresponding to the device ID.

For example, as illustrated in FIG. 13, regarding the device A, it is assumed that two type A devices (a device Aa having a device ID of "0001" and a device Ab having a device ID of "0002") are under control and both the device Aa and the device Ab are presently in the open status. In this case, if there is an occupation request for a device A from a client terminal 30, either one of the device Aa or the device Ab can be selected. For example, the device Aa is selected, so then the device Aa is placed in the occupied status, and a session with the client terminal 30 is started.

Next, if there is a request to occupy a device A from some other client terminal 30 while the session with device Aa is continuing, the device Ab will be selected (assuming device Ab is still in the open status). Then, the device Ab is then set as occupied and a session with the other client terminal 30 is started.

If there is an occupation request for a device A from still another client terminal 30 while both sessions are still on-going, the occupation request is rejected.

As described above, according to the third embodiment, a plurality of the devices of the same type can be connected and managed by one device server 20. Even in that case, similarly to the first embodiment or the second embodiment, it is possible to exhibit the effect of preventing a device from being unnecessarily treated as occupied due to trouble such as a power failure of the client terminal 30.

### (Other Embodiments)

In general, the above-disclosed embodiments may be combined with one another to the extent feasible.

In the above-described embodiments, the validity period record 2221 includes the timeout date and time DTL. In the other embodiments, the validity period record 2221 includes the time data indicating the presently elapsed time. The elapsed time is the elapsed time from the start date and time DTS when the validity period record of ACT30 is first registered. When the session ID of ACT8 is acquired, the time is the time elapsed from the session start time. Then, in ACT3 of FIG. 10, once the elapsed time reaches the occupation time TX of the corresponding device, the processor 21 determines the expiration of the period. Even if such a configuration is adopted, it is possible to exhibit the same functions and effects as those of the above-described embodiments.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A device control apparatus, comprising:
a communication interface connectable to a plurality of client terminals via a network;
a local device interface connectable to a plurality of peripheral devices;
a registration unit configured to receive an occupation request for a peripheral device from a client terminal and then register the peripheral device for which the occupation request has been received as occupied by the client terminal if the peripheral device is not registered as occupied by another client terminal;
a setting unit configured to set a release time for releasing the occupation of the registered peripheral device;
an update unit configured to update the release time if communication occurs between the registered peripheral device and the client terminal; and
a release unit configured to release the occupation of the registered peripheral device when the release time elapses.

2. The device control apparatus according to claim 1, further comprising a notification unit configured to notify the client terminal that the occupation of the previously registered peripheral device has been released.

3. The device control apparatus according to claim 1 or 2, wherein, if an occupation request for a plurality of peripheral devices is received from a client terminal, the registration unit is configured to collectively register all of the plurality of peripheral devices corresponding to the occupation request not already occupied by another client terminal.

4. The device control apparatus according to claim 3, wherein, if communication occurs between the client terminal and any one of the collectively registered plurality of peripheral devices, the update unit is configured to update the release time for each of the collectively registered plurality of peripheral devices.

5. The device control apparatus according to claim 3, wherein, if communication occurs between the client terminal and one of the collectively registered plurality of peripheral devices, the update unit is configured to update the release time for just the one of the collectively registered plurality of peripheral devices.

6. The device control apparatus according to claim 1 or 2, wherein, if an occupation request for a plurality of peripheral devices is received from a client terminal, the registration unit is configured to individually register each one of the plurality of peripheral devices corresponding to the occupation request not already occupied by another client terminal.

7. The device control apparatus according to claim 6, wherein, if communication occurs between the client terminal and one of the individually registered peripheral devices, the update unit is configured to update the release time for just the one of the individually registered plurality of peripheral devices.

8. The device control apparatus according to any one of claims 1 to 7, wherein the update unit is configured to update the release time for the occupied peripheral device by an amount of time corresponding to a type of the occupied peripheral device.

9. The device control apparatus according to any one of claims 1 to 8, further comprising an acquisition unit configured to acquire device identification information from a peripheral device,
wherein the registration unit is further configured to register a peripheral device for which an occupation request has been received in association with the device identification information acquired from the peripheral device.

10. The device control apparatus according to claim 9, wherein the plurality of peripheral devices includes at least two peripheral devices of the same device type.

11. A non-transitory computer-readable medium storing program instructions which when executed by a processor of a device control apparatus having communication interface connectable to a plurality of client terminals via a network and a local device interface connectable to a plurality of peripheral devices causes the processor to perform a method comprising:
receiving an occupation request for a peripheral device from a client terminal and then registering the peripheral device for which the occupation request has been received as occupied by the client terminal if the peripheral device is not already registered as occupied by another client terminal;
setting a release time for releasing the occupation of the registered peripheral device;
updating the release time if communication occurs between the registered peripheral device and the client terminal; and
releasing the occupation of the registered peripheral device when the release time elapses.

12. The non-transitory computer-readable medium according to claim 11, the method further comprising controlling the communication interface to notify the client terminal that the occupation of the previously registered peripheral device has been released.

13. The non-transitory computer-readable medium according to claim 11 or 12, wherein, if an occupation request for a plurality of peripheral devices is received from a client terminal, all of the plurality of peripheral devices corresponding to the occupation request not already occupied by another client terminal is collectively registered.

14. The non-transitory computer-readable medium according to claim 11 or 12, wherein, if an occupation request for a plurality of peripheral devices is received from a client terminal, each one of the plurality of peripheral devices corresponding to the occupation request not already occupied by another client terminal is individually registered.

15. The non-transitory computer-readable medium according to any one of claims 11 to 14, the method further comprising:
acquiring device identification information from a peripheral device; and
registering a peripheral device for which an occupation request has been received in association with the device identification information acquired from the peripheral device.
